(19) 

(11) **EP 4 790 096 A1**

(12) **EUROPEAN PATENT APPLICATION**
published in accordance with Art. 153(4) EPC

(43) Date of publication:
**12.08.2026 Bulletin 2026/33**

(21) Application number: **24874581.2**

(22) Date of filing: **01.10.2024**

(51) International Patent Classification (IPC):
***C08L 67/00*** *(2006.01)* ***C08G 63/127*** *(2006.01)*

(52) Cooperative Patent Classification (CPC):
(C-Sets available)
**C08G 63/181; C08G 18/4213; C08G 63/183; C08G 63/20; C09J 167/02;** Y02P 20/582 (Cont.)

(86) International application number:
**PCT/JP2024/035037**

(87) International publication number:
**WO 2025/074979 (10.04.2025 Gazette 2025/15)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **02.10.2023 JP 2023171634**

(71) Applicant: **Mitsubishi Chemical Corporation**
**Tokyo 100-8251 (JP)**

(72) Inventor: **SAKAMOTO, Kento**
**Tokyo 100-8251 (JP)**

(74) Representative: **Hoffmann Eitle**
**Patent- und Rechtsanwälte PartmbB**
**Arabellastraße 30**
**81925 München (DE)**

(54) **POLYESTER-BASED RESIN, POLYESTER-BASED CONTAINER, POLYESTER-BASED FILM, POLYESTER-BASED FIBER, AND METHOD FOR PRODUCING POLYESTER-BASED RESIN**

(57) Provided is a polyester resin being a reaction product of a polyester (A) having a glass transition temperature of 30°C or higher and lower than 140°C and a polyester (B1) having a glass transition temperature of -80°C or higher and lower than 30°C as a polyester resin excellent in mechanical recyclability and optical properties without deterioration in mechanical properties even when a pressure sensitive adhesive is included in a mechanical recycling step.



Processed by Luminess, 75001 PARIS (FR)

(Cont. next page)

(52) Cooperative Patent Classification (CPC): (Cont.)

C-Sets
**C09J 167/02, C08L 67/02**

## Description

Technical Field

The present disclosure relates to a polyester resin, a polyester container, a polyester film, a polyester fiber, and a method for producing a polyester resin, and more particularly, to a polyester resin, a polyester container, a polyester film, a polyester fiber, and a method for producing a polyester resin, in which mechanical properties of resin are not deteriorated, and mechanical recyclability and optical properties are excellent.

Background Art

In recent years, there has been a strong demand for recycling of polyester resin molded articles such as polyester containers, polyester films, and polyester fibers, from the viewpoint of issues such as environmental pollution and exhaustion of petroleum resources.

As recycling of polyester resin molded articles, mechanical recycling and chemical recycling are known, and mechanical recycling is the mainstream from the viewpoint of cost.

The mechanical recycling is a method in which a used polyester resin molded article is crushed into pellets or flakes, then the entire pellets or flakes are homogenized by heating and melting, and the resulting regenerated resin is used again as a material for a polyester resin molded article.

In general, a label with a pressure sensitive adhesive, on a surface of which various information is recorded, is attached to a polyester container such as a polyethylene terephthalate (PET) bottle. In addition, in a pressure sensitive adhesive tape including a PET film as a substrate, a pressure sensitive adhesive layer is usually provided on the PET film.

When such a polyester resin molded article with a pressure sensitive adhesive is mechanically recycled, the pressure sensitive adhesive acts as a foreign matter to deteriorate mechanical properties of the resin, causing deterioration in recyclability and optical properties. Therefore, when the polyester resin molded article with a pressure sensitive adhesive is mechanically recycled, extremely complicated operations such as peeling off and removing the pressure sensitive adhesive are required.

For example, Patent Document 1 discloses a pressure sensitive adhesive label including: a polyester resin substrate having compatibility with a polyester container as an adherend; a coating layer provided on one side of the polyester resin substrate, the coating layer capable of being peeled off from the substrate by washing with and immersion in an aqueous alkaline solution and having printability; and a polyester pressure sensitive adhesive layer provided on the other side of the polyester resin substrate.

Further, Patent Document 2 discloses a pressure sensitive adhesive label which enables a recycling treatment of a polyester container without peeling the pressure sensitive adhesive label off from the polyester container and enables detachment (peeling off) of a printed portion in a short time in an aqueous alkaline solution at a low temperature (about 70°C).

Citation List

Patent Literature

Patent Document 1: JP 2000-10489 A
Patent Document 2: JP 2023-69194 A

Summary

Technical Problem

The pressure sensitive adhesive labels disclosed in Patent Documents 1 and 2 are excellent in detachability of a printed layer, but have challenges in recyclability and optical properties of a polyester resin molded article. Therefore, in order to improve mechanical recyclability of a polyester resin molded article, there is a demand for monomaterialization including a pressure sensitive adhesive and improvement in recyclability of the pressure sensitive adhesive.

In general, acrylic pressure sensitive adhesives are widely used for polyester molded articles. However, the acrylic pressure sensitive adhesive becomes a foreign matter during mechanical recycling of the polyester, and therefore the mechanical properties are deteriorated, leading to deterioration in mechanical recyclability and optical properties.

Under such a background, the present disclosure provides a polyester resin which is excellent in mechanical

recyclability and optical properties without deterioration in mechanical properties even when a pressure sensitive adhesive is included in a mechanical recycling step, and a method for producing the polyester resin.

Solution to Problem

The present inventors have found that a polyester resin, which is a reaction product of a polyester (A) having a glass transition temperature of 30°C or higher and lower than 140°C and a polyester (B1) having a glass transition temperature of -80°C or higher and lower than 30°C, is not deteriorated in mechanical properties of the resin and is excellent in mechanical recyclability and optical properties.

That is, the gist of the present disclosure is the following [1] to [23].

[1] A polyester resin, which is a reaction product of a polyester (A) having a glass transition temperature of 30°C or higher and lower than 140°C and a polyester (B1) having a glass transition temperature of -80°C or higher and lower than 30°C.

[2] The polyester resin according to [1], wherein a content of nitrogen atoms contained in the polyester resin is from 0.1 to 1000 ppm.

[3] The polyester resin according to [1] or [2], wherein a content of a structural unit derived from the polyester (B1) in the polyester resin is 10 mass% or less.

[4] The polyester resin according to any one of [1] to [3], wherein the polyester resin has a glass transition temperature of 30°C or higher.

[5] The polyester resin according to any one of [1] to [4], wherein the polyester resin has a weight average molecular weight of from 5000 to 300000.

[6] The polyester resin according to any one of [1] to [5], wherein the polyester resin has an acid value of 5 mg KOH/g or less.

[7] The polyester resin according to any one of [1] to [6], wherein the polyester resin has a structural unit derived from polyvalent carboxylic acids and a structural unit derived from polyhydric alcohols, and a content of a structural unit derived from aromatic dicarboxylic acids in the polyester resin is from 10 to 90 mass%.

[8] The polyester resin according to any one of [1] to [7], wherein the polyester resin when formed into a sheet having a thickness of 50 μm has a haze of 5% or less.

[9] The polyester resin according to any one of [1] to [8], wherein the polyester (A) has a structural unit derived from terephthalic acids and a structural unit derived from ethylene glycol.

[10] The polyester resin according to any one of [1] to [9], wherein the polyester (A) has a structural unit derived from a regenerated thermoplastic polyester (A1).

[11] The polyester resin according to any one of [1] to [10], wherein the polyester (B1) has a structural unit derived from aromatic dicarboxylic acids.

[12] The polyester resin according to any one of [1] to [11], wherein a content of aromatic dicarboxylic acids in a structural unit derived from polyvalent carboxylic acids (Ba) of the polyester (B1) is from 10 to 100 mol%.

[13] The polyester resin according to any one of [1] to [12], wherein a content of aliphatic diols having from 1 to 5 carbon atoms in a structural unit derived from polyhydric alcohols (Bb) of the polyester (B1) is from 10 to 100 mol%.

[14] The polyester resin according to any one of [1] to [13], wherein the polyester (B1) has an enthalpy of crystalline fusion of 10 J/g or less.

[15] The polyester resin according to any one of [1] to [14], wherein the polyester (B1) is a crosslinked product.

[16] The polyester resin according to any one of [1] to [15], wherein a gel fraction of a crosslinked product of the polyester resin (B1) is from 10 to 100%.

[17] A polyester container containing the polyester resin according to any one of [1] to [16].

[18] A polyester film containing the polyester resin according to any one of [1] to [16].

[19] A polyester fiber containing the polyester resin according to any one of [1] to [16].

[20] A method for producing a polyester resin, the method including reacting a polyester (A) having a glass transition temperature of 30°C or higher and lower than 140°C and a polyester (B1) having a glass transition temperature of -80°C or higher and lower than 30°C.

[21] The method for producing a polyester resin according to [20], wherein the reacting is performed in a nitrogen atmosphere.

[22] The method for producing a polyester resin according to [20] or [21], wherein the reacting is performed under a vacuum condition of from 0.1 to 50 torr.

[23] The method for producing a polyester resin according to any one of [20] to [22], wherein, in the reacting, the polyester (A) and the polyester (B1) are heated to and melted at a temperature of from 160 to 280°C.

## Advantageous Effects

In the present disclosure, the polyester having a glass transition temperature of 30°C or higher and lower than 140°C and the polyester having a glass transition temperature of -80°C or higher and lower than 30°C and contained in the polyester pressure sensitive adhesive are reacted, and thus the pressure sensitive adhesive is not required to be removed, the mechanical properties of the resin are not deteriorated, and mechanical recyclability and optical properties are excellent.

## Description of Embodiments

The present disclosure will be described below with reference to embodiments for carrying out the present disclosure. However, the present disclosure is not limited to the embodiments described below.
In the present specification, "X and/or Y (X and Y are any configurations)" means at least one of X or Y, and means three ways of X only, Y only, and X and Y.
In addition, in the present specification, an expression of "from X to Y" (where X and Y are any numbers) includes the meaning of "X or more and Y or less" and the meaning of "preferably more than X" or "preferably less than Y", unless otherwise specified.
Further, an expression of "X or more" (where X is any number) or "Y or less" (where Y is any number) also includes the meaning of "preferably more than X" or "preferably less than Y".
In the present specification, the meaning of the term "film" includes a "tape" and a "sheet".
In the present specification, the "s" following the name of a compound means a concept encompassing the compound and a derivative of the compound. For example, the term "carboxylic acids" encompasses a carboxylic acid, and derivatives of the carboxylic acid, such as a carboxylate salt, a carboxylic anhydride, a carboxylic acid halide, and a carboxylic ester.
In the present specification, the term "main component" means a component that significantly affects the properties of the target object, and the content of the component in the target object is usually 50 mass% or more, preferably 55 mass% or more, more preferably 60 mass% or more, and still more preferably 70 mass% or more, and may be 100 mass%.
In the present specification, with regard to numerical ranges described in stages, an upper limit value or a lower limit value of a numerical range of a certain stage can be combined in any way with an upper limit value or a lower limit value of a numerical range of another stage. In addition, in a numerical range described herein, the upper limit value or the lower limit value of the numerical range can be replaced by a value shown in the Examples.
The polyester resin according to an embodiment of the present disclosure (hereinafter, sometimes referred to as "the present polyester resin") is a reaction product of a polyester (A) having a glass transition temperature of 30°C or higher and lower than 140°C and a polyester (B1) having a glass transition temperature of -80°C or higher and lower than 30°C. Hereinafter, the "polyester (A) having a glass transition temperature of 30°C or higher and lower than 140°C" is sometimes referred to as "polyester (A)". The "polyester (B1) having a glass transition temperature of -80°C or higher and lower than 30°C" is sometimes referred to as "polyester (B1)".
As the polyester (A) and the polyester (B1), used products separated and collected as recyclable waste, scrap materials generated in the production process, unused products, and the like can be used.
The shape of the polyester (A) is not particularly limited, but is preferably a resin. Specific examples of the resin include molded articles, and examples of molded articles include containers such as liquid bottles, and substrate films such as pressure sensitive adhesive tapes.
In addition, the polyester (B1) is preferably contained in a polyester pressure sensitive adhesive (B) used as a pressure sensitive adhesive for attaching a label to a container containing the polyester (A) or as a pressure sensitive adhesive layer of a pressure sensitive adhesive tape using a film containing the polyester (A) as a substrate, from the viewpoint of excellent mechanical recyclability with the polyester (A).
Hereinafter, the respective components will be described.

### Polyester (A)

The polyester (A) has a glass transition temperature of 30°C or higher and lower than 140°C.
The polyester (A) preferably includes a structural unit derived from polyvalent carboxylic acids (Aa) and a structural unit derived from polyhydric alcohols (Ab) in molecules thereof, from the viewpoint of excellent moldability, strength, heat resistance, and mechanical recyclability with the polyester (B1). Such a polyester (A) is usually produced by ester-bonding of polyvalent carboxylic acids (Aa) and polyhydric alcohols (Ab).
Examples of the polyvalent carboxylic acids (Aa) include aromatic dicarboxylic acids such as terephthalic acids, isophthalic acids, 2-chloroterephthalic acids, 2,5-dichloroterephthalic acids, 2-methylterephthalic acids, 4,4-stilbenedi-

carboxylic acids, 4,4-biphenyldicarboxylic acids, orthophthalic acids, 2,6-naphthalenedicarboxylic acids, 2,7-naphthalenedicarboxylic acids, anthracenedicarboxylic acids, 4,4-diphenyletherdicarboxylic acids, 4,4-diphenoxyethanedicarboxylic acids, and 5-sodium sulfoisophthalic acids; aliphatic dicarboxylic acids such as adipic acids, sebacic acids, azelaic acids, dodecanedioic acids, malonic acids, succinic acids, glutaric acids, trimethyladipic acids, pimelic acids, 3-methylglutaric acids, 2,2-dimethylglutaric acids, 1,9-nonanedicarboxylic acids, dimer acids derived by dimerization of unsaturated monocarboxylic acids such as oleic acid, linoleic acid, linolenic acid, and erucic acid, hydrogenated dimer acids produced by hydrogenating dimer acids, fumaric acids, maleic acids, and itaconic acids; and alicyclic dicarboxylic acids such as 1,3-cyclohexanedicarboxylic acids and 1,4-cyclohexanedicarboxylic acids. One of these may be used alone, or two or more of these may be used in combination.

Among these, aromatic dicarboxylic acids are preferable from the viewpoint of excellent moldability, strength, heat resistance, and mechanical recyclability, terephthalic acids, isophthalic acids, and orthophthalic acids are preferable from the viewpoint of more excellent mechanical recyclability and optical properties, and terephthalic acids are more preferable.

Examples of the polyhydric alcohols (Ab) include bifunctional alcohols such as aliphatic diols such as ethylene glycol, 1,3-propanediol, 1,4-butanediol, 1,5-pentanediol, 1,6-hexanediol, 1,9-nonanediol, 1,10-decanediol, 1,2-propylene glycol, 2-methyl-1,3-propanediol, neopentyl glycol, 3-methyl-1,5-pentanediol, 2-ethyl-2-butylpropanediol, and dimer diols which are reduced products of dimer acids derived by dimerization of unsaturated monocarboxylic acids such as oleic acid, linoleic acid, linolenic acid, and erucic acid, alicyclic diols such as cyclohexanediol, and aromatic diols such as p-xylenediol, bisphenol A, tetrabromobisphenol A, and tetrabromobisphenol A-bis(2-hydroxyethyl ether); and trifunctional and higher functional alcohols such as glycerin, trimethylolpropane, and pentaerythritol. One of these may be used alone, or two or more of these may be used in combination.

Among these, aliphatic diols are preferable from the viewpoint of excellent moldability, strength, heat resistance, and mechanical recyclability, aliphatic diols having from 1 to 5 carbon atoms are more preferable from the viewpoint of more excellent mechanical recyclability and optical properties, and ethylene glycol is still more preferable.

For the polyvalent carboxylic acids (Aa) and the polyhydric alcohols (Ab), it is preferable to use regenerated thermoplastic polyesters (A1) such as unused molded articles of the polyester (A), pulverized products of the remainder of molded articles of the polyester (A), and recycled products recovered from waste and washed. Among these, it is preferable to use recycled products from the viewpoint of global environment. They are commercially available in a washed, dried and pelletized or flaked form.

The polyester (A) can be produced by subjecting polymerization components including the polyvalent carboxylic acids (Aa) and the polyhydric alcohols (Ab) to a polycondensation reaction in the presence of a catalyst by a known method. In the polycondensation reaction, an esterification reaction and/or a transesterification reaction is first performed, and then a polycondensation reaction is performed. When the regenerated thermoplastic polyesters (A1) are used as the polyvalent carboxylic acids (Aa) and the polyhydric alcohols (Ab), the regenerated thermoplastic polyesters (A1) may be contained in the polymerization components as they are, and the resulting polyester resin (A) has a structural unit derived from the regenerated thermoplastic polyester (A1).

The polyester (A) is preferably produced using polyhydric alcohols (Ab) having a hydroxy group in a molar ratio of 1.01 or more per mol of the carboxy group of the polyvalent carboxylic acids (Aa), and, especially, the molar ratio is more preferably from 1.05 to 2.5, more preferably from 1.1 to 2.0, and still more preferably from 1.2 to 1.7. That is, when the molar ratio is too small, the esterification reaction and/or the transesterification reaction tends to be insufficient. On the other hand, when the molar ratio is too large, the amount of glycol distilled off is too large, and the economic efficiency tends to be poor.

Specific examples of the polyester (A) include polyethylene terephthalate-based resins, polypropylene terephthalate-based resins, polybutylene terephthalate-based resins, polyethylene isophthalate-based resins, polyethylene naphthalate-based resins, polybutylene naphthalate-based resins, polyethylene terephthalate/isophthalate-based resins, polyethylene/neopentyl terephthalate-based resins, polybutylene succinatebased resins, and 3-hydroxybutyrate/3-hydroxyhexanoate polymers.

Among these, the polyester (A) preferably has a structural unit derived from terephthalic acids and a structural unit derived from ethylene glycol from the viewpoint of moldability, strength, heat resistance, and mechanical recyclability, more preferably is a polyethylene terephthalate-based resin, and still more preferably is a regenerated polyethylene terephthalate-based resin.

The polyester (A) may have, in a range of 50 mass% or less of its structural units, a structural unit derived from additional polyvalent carboxylic acids (Aa) other than the polyvalent carboxylic acids (Aa) constituting the basic structure and/or a structural unit derived from additional polyhydric alcohols (Ab) other than the polyhydric alcohols (Ab) constituting the basic structure.

The content of the structural unit derived from aromatic dicarboxylic acids in the polyester (A) is usually from 10 to 90 mass%, preferably from 30 to 85 mass%, more preferably from 40 to 80 mass%, still more preferably from 50 to 75 mass%, and most preferably from 60 to 70 mass%. When the content of the structural unit derived from aromatic polyvalent

carboxylic acids is within the above range, moldability, strength, heat resistance, mechanical recyclability, and optical properties tend to be excellent.

The content of the structural unit derived from aliphatic diols having from 1 to 5 carbon atoms in the polyester (A) is usually from 10 to 90 mass%, preferably from 15 to 70 mass%, more preferably from 20 to 60 mass%, still more preferably from 25 to 50 mass%, and most preferably from 30 to 40 mass%. When the content of the structural unit derived from aliphatic diols having from 1 to 5 carbon atoms is within the above range, moldability, strength, heat resistance, mechanical recyclability, and optical properties tend to be excellent.

In the case of using the regenerated thermoplastic polyester (A1) as the polymerization component, the content of the structural unit derived from the regenerated thermoplastic polyester (A1) in the polyester (A) is usually preferably 10 mass% or more, more preferably from 20 to 100 mass%, still more preferably from 30 to 90 mass%, and most preferably from 40 to 80 mass%. When the content of the structural unit derived from the regenerated thermoplastic polyester (A1) is within the above range, mechanical recyclability, optical properties, and an effect of reducing environmental load tend to be excellent.

When the polyester (A) has a structural unit derived from aromatic dicarboxylic acids, a content of the structural unit derived from aromatic dicarboxylic acids with respect to the structural unit derived from the polyvalent carboxylic acids (Aa) is preferably 20 mol% or more, more preferably 40 mol% or more, still more preferably 60 mol% or more, particularly preferably 80 mol% or more, and most preferably 90 mol% or more. When the content of the structural unit derived from aromatic dicarboxylic acids is within the above range, moldability, strength, heat resistance, mechanical recyclability, and optical properties tend to be excellent.

When the polyester (A) has a structural unit derived from aliphatic dicarboxylic acids, a content of the structural unit derived from aliphatic dicarboxylic acids with respect to the structural unit derived from the polyvalent carboxylic acids (Aa) is preferably 80 mol% or less, more preferably 60 mol% or less, still more preferably 40 mol% or less, particularly preferably 20 mol% or less, and most preferably 10 mol% or less. When the content of the structural unit derived from aliphatic dicarboxylic acids is within the above range, moldability, strength, heat resistance, mechanical recyclability, and optical properties tend to be excellent.

When the polyester (A) has a structural unit derived from aliphatic diols having from 1 to 5 carbon atoms, a content of the structural unit derived from aliphatic diols having from 1 to 5 carbon atoms with respect to the structural unit derived from the polyhydric alcohols (Ab) is preferably 20 mol% or more, more preferably 40 mol% or more, still more preferably 60 mol% or more, particularly preferably 80 mol% or more, and most preferably 90 mol% or more. When the content of the structural unit derived from aliphatic diols having from 1 to 5 carbon atoms is within the above range, moldability, strength, heat resistance, mechanical recyclability, and optical properties tend to be excellent.

The glass transition temperature (Tg) of the polyester (A) is 30°C or higher and lower than 140°C, preferably from 40 to 130°C, more preferably from 50 to 120°C, and still more preferably from 60 to 100°C. When the glass transition temperature (Tg) is within the above range, moldability, strength, heat resistance, mechanical recyclability, and optical properties tend to be excellent.

The polyester (A) may have a melting point from the viewpoint of excellent moldability, strength, and heat resistance. The melting point (Tm) of the polyester (A) is usually 60°C or higher, preferably from 100 to 300°C, more preferably from 150 to 280°C, and still more preferably from 200 to 260°C. When the melting point (Tm) is within the above range, moldability, strength and heat resistance tend to be excellent.

The polyester (A) may have an enthalpy of crystalline fusion from the viewpoint of excellent moldability, strength, and heat resistance. The enthalpy of crystalline fusion of the polyester (A) is usually 100 J/g or less, preferably from 0.1 to 80 J/g, more preferably from 1 to 60 J/g or from 3 to 40 J/g, and still more preferably from 5 to 35 J/g. When the enthalpy of crystalline fusion is within the above range, moldability, strength and heat resistance tend to be excellent.

The glass transition temperature (Tg), the melting point (Tm), and the enthalpy of crystalline fusion are measured by using a differential scanning calorimeter DSC (for example, a DSC "Q20," available from TA Instruments). A measurement temperature range is from -90 to 200°C, and a temperature rise rate is 10°C/min.

A weight average molecular weight of the polyester (A) is usually from 5000 to 300000, preferably from 10000 to 150000, more preferably from 20000 to 100000, and still more preferably from 30000 to 75000. When the weight average molecular weight is within the above range, moldability, strength, heat resistance, and mechanical recyclability tend to be excellent.

The weight average molecular weight is a weight average molecular weight in terms of the molecular weight of standard polystyrene, and is measured by using a high performance liquid chromatograph ("HLC-8320GPC," available from Tosoh Corporation) with two columns (TSKgel SuperMultipore HZ-M (exclusion limit molecular weight: $2 \times 10^6$, theoretical plate number: 16000 plates/column, filler material: styrenedivinylbenzene copolymer, filler particle size: 4 μm)) in series.

An ester bond concentration of the polyester (A) is usually from 1 to 14 mmol/g, preferably from 4 to 13 mmol/g, more preferably from 8 to 12 mmol/g, and still more preferably from 9 to 11 mmol/g. When the ester bond concentration is within the above range, moldability, strength, heat resistance, and mechanical recyclability tend to be excellent.

The ester bond concentration (mmol/g) is the number of moles of ester bonds per gram of the polyester (A) and is determined, for example, by a calculated value from a feed amount. In the calculation method, the value is obtained by dividing the number of moles of whichever has the smaller feed amount between the polyvalent carboxylic acids (Aa) and the polyhydric alcohols (Ab) by the total weight. An example of a calculation equation is shown below. In the case of using a monomer having both a carboxy group and a hydroxy group or in the case of preparing the polyester from caprolactone or the like, the calculation method is appropriately changed.

Case Where Feed Amount of Polyvalent Carboxylic Acids (Aa) Is Smaller Than That of Polyhydric Alcohols (Ab)

$$\text{Ester bond concentration (mmol/g)} = [(D1/d1 \times m1 + D2/d2 \times m2 + D3/d3 \times m3 \ldots)/Z] \times 1000$$

- D: Feed amount (g) of polyvalent carboxylic acids (Aa)
- d: Molecular weight of polyvalent carboxylic acids (Aa)
- m: Number of carboxylic acid groups per molecule of polyvalent carboxylic acids (Aa)
- Z: Weight (g) of finished product

Case where Feed Amount of Polyhydric Alcohols (Ab) is Smaller than That of Polyvalent Carboxylic Acids (Aa)

$$\text{Ester bond concentration (mmol/g)} = [(E1/e1 \times n1 + E2/e2 \times n2 + E3/e3 \times n3 \ldots)/Z] \text{ x } 1000$$

- E: Feed amount (g) of polyhydric alcohols (Ab)
- e: Molecular weight of polyhydric alcohols (Ab)
- n: Number of hydroxy groups per molecule of polyhydric alcohols (Ab)
- Z: Weight (g) of finished product

The ester bond concentration can also be measured by a known method using NMR or the like.

Examples of a method for adjusting the ester bond concentration include a method of selecting polyhydric alcohols having 4 or less carbon atoms as the polyhydric alcohols (Ab), a method of increasing a content of a linear alkyl aliphatic dicarboxylic acids as the polyvalent carboxylic acids (Aa), and a method of combining both methods.

An acid value of the polyester (A) is usually 5 mg KOH/g or less, preferably 4.5 mg KOH/g or less, more preferably 4 mg KOH/g or less, still more preferably 3.5 mg KOH/g or less, particularly preferably 3 mg KOH/g or less, and most preferably 1 mg KOH/g or less. When the acid value is within the above range, hydrolysis resistance, heat resistance, mechanical recyclability, and optical properties tend to be excellent. The acid value is determined through neutralization titration in accordance with JIS K 0070.

Polyester Pressure Sensitive Adhesive (B)

The polyester pressure sensitive adhesive (B) contains a polyester (B1) as a main component, has pressure-sensitive adhesiveness under a condition of 25°C, and can be used as a pressure sensitive adhesive for bonding materials.

The term "having pressure-sensitive adhesiveness" means that a ball number is 1 or more as a result of performing an inclined ball tack test at an angle of an inclined plate of 30° at 25°C in accordance with JIS Z0237:2009.

The polyester pressure sensitive adhesive (B) preferably contains a polyester (B1) having a structural unit derived from polyvalent carboxylic acids (Ba) and a structural unit derived from polyhydric alcohols (Bb) from the viewpoint of mechanical recyclability and optical properties, and more preferably contains aromatic dicarboxylic acids as the structural unit derived from the polyvalent carboxylic acids (Ba) and aliphatic diols having from 1 to 5 carbon atoms as the structural unit derived from the polyhydric alcohols (Bb).

Polyester (B1)

The polyester (B1) has a glass transition temperature of -80°C or higher and lower than 30°C.

The polyester (B1) is produced by copolymerizing (condensation polymerizing) polymerization components including the polyvalent carboxylic acids (Ba) and the polyhydric alcohols (Bb) as constituent raw materials, and has the structural unit derived from the polyvalent carboxylic acids (Ba) and the structural unit derived from the polyhydric alcohols (Bb) as a resin composition thereof.

Polyvalent Carboxylic Acids (Ba)

Examples of the polyvalent carboxylic acids (Ba) include dicarboxylic acids and trivalent or higher polyvalent carboxylic acids, and dicarboxylic acids are preferably used from the viewpoint of stable production of the polyester (B1). One of these polyvalent carboxylic acids (Ba) may be used alone, or two or more thereof may be used in combination.

Examples of the dicarboxylic acids include aromatic dicarboxylic acids such as terephthalic acids, isophthalic acids, 2-chloroterephthalic acids, 2,5-dichloroterephthalic acids, 2-methylterephthalic acids, 4,4-stilbenedicarboxylic acids, 4,4-biphenyldicarboxylic acids, orthophthalic acids, 2,6-naphthalenedicarboxylic acids, 2,7-naphthalenedicarboxylic acids, anthracenedicarboxylic acids, 4,4-diphenyletherdicarboxylic acids, 4,4-diphenoxyethanedicarboxylic acids, and 5-sodium sulfoisophthalic acids; aliphatic dicarboxylic acids such as adipic acids, sebacic acids, azelaic acids, dodecanedioic acids, malonic acids, succinic acids, glutaric acids, trimethyladipic acids, pimelic acids, 3-methylglutaric acids, 2,2-dimethylglutaric acids, 1,9-nonanedicarboxylic acids, dimer acids derived by dimerization of unsaturated monocarboxylic acids such as oleic acid, linoleic acid, linolenic acid, and erucic acid, hydrogenated dimer acids produced by hydrogenating dimer acids, fumaric acids, maleic acids, and itaconic acids; and alicyclic dicarboxylic acids such as 1,3-cyclohexanedicarboxylic acids and 1,4-cyclohexanedicarboxylic acids.

Examples of the trivalent or higher polyvalent carboxylic acids include trimellitic acids, pyromellitic acids, adamantanetricarboxylic acids, and trimesic acids.

Among the polyvalent carboxylic acids (Ba), aromatic dicarboxylic acids are preferable from the viewpoint of excellent hydrolysis resistance, heat resistance, mechanical recyclability, and optical properties of the polyester (B1). Among the aromatic dicarboxylic acids, from the viewpoint of excellent mechanical recyclability, terephthalic acids, isophthalic acids, orthophthalic acids, naphthalenedicarboxylic acids, and furandicarboxylic acids are more preferable. From the viewpoints of adjustment of crystallinity of the polyester resin and excellent tackiness and pressure-sensitive adhesive force, isophthalic acids, orthophthalic acids, and furandicarboxylic acids are still more preferable.

In addition, as the polyvalent carboxylic acids (Ba), aliphatic dicarboxylic acids having 4 or more carbon atoms (including the carbon of the carboxy group) are preferably contained, and among these, from the viewpoint of excellent pressure-sensitive adhesive force, mechanical recyclability, and optical properties, aliphatic dicarboxylic acids having from 6 to 12 carbon atoms (including the carbon of the carboxy group) such as adipic acids, pimelic acids, azelaic acids, and sebacic acids are more preferably contained.

Polyhydric Alcohols (Bb)

Examples of the polyhydric alcohols (Bb) include diols and trihydric or higher polyhydric alcohols. One of the polyhydric alcohols (Bb) may be used alone, or two or more thereof may be used in combination.

Examples of the diols include aliphatic diols such as ethylene glycol, 1,3-propanediol, 1,4-butanediol, 1,5-pentanediol, 1,6-hexanediol, 1,9-nonanediol, 1,10-decanediol, 1,2-propylene glycol, 2-methyl-1,3-propanediol, neopentyl glycol, 3-methyl-1,5-pentanediol, 2-ethyl-2-butylpropanediol, dimer diols which are reduced products of dimer acids derived by dimerization of unsaturated monocarboxylic acids such as oleic acid, linoleic acid, linolenic acid, and erucic acid, 2,4-diethyl-1,5-pentanediol, and 2,2,4-trimethyl-1,3-pentanediol; alicyclic diols such as 1,2-cyclohexanedimethanol, 1,3-cyclohexanedimethanol, 1,4-cyclohexanedimethanol, spiroglycol, tricyclodecanedimethanol, adamantanediol, and 2,2,4,4-tetramethyl-1,3-cyclobutanediol; and aromatic diols such as 4,4'-thiodiphenol, 4,4'-methylenediphenol, 4,4'-dihydroxybiphenyl, o-, m-, and p-dihydroxybenzenes, 2,5-naphthalenediol, p-xylenediol, and ethylene oxide-adducts and propylene oxide-adducts thereof.

Among these, from the viewpoint of excellent mechanical recyclability with the polyester (A), aliphatic diols are preferable, aliphatic diols having from 1 to 5 carbon atoms are more preferable, and ethylene glycol, 1,3-propanediol, 1,4-butanediol, and 2,2-dimethyl-1,3-propanediol (neopentyl glycol) are still more preferable.

Examples of the trihydric or higher polyhydric alcohols include pentaerythritol, dipentaerythritol, tripentaerythritol, glycerin, trimethylolpropane, trimethylolethane, 1,2,4-butanetriol, 1,2,5-pentanetriol, 1,2,6-hexanetriol, 1,3,6-hexanetriol, and adamantanetriol.

Among the polyhydric alcohols (Bb), diols having a hydrocarbon group in a side chain are preferable from the viewpoint of increasing the number of branch points and breaking the crystallinity. Examples of the diols having a hydrocarbon group in a side chain include aliphatic diols having a branched structure such as 1,2-propylene glycol, 2,4-dimethyl-2-ethylhexane-1,3-diol, 2-methyl-1,3-propanediol, neopentyl glycol, 2-methyl-2-ethyl-1,3-propanediol, 2-ethyl-2-butyl-1,3-propanediol, 2-ethyl-2-isobutyl-1,3-propanediol, 1,3-butanediol, 3-methyl-1,5-pentanediol, 2,2,4-trimethyl-1,6-hexanediol, and dimer diols which are reduced products of dimer acids derived by dimerization of unsaturated monocarboxylic acids such as oleic acid, linoleic acid, linolenic acid, and erucic acid; and alicyclic diols having a branched structure such as 1,2-cyclohexanedimethanol, 1,3-cyclohexanedimethanol, 1,4-cyclohexanedimethanol, spiroglycol, tricyclodecanedimethanol, adamantanediol, and 2,2,4,4-tetramethyl-1,3-cyclobutanediol.

Among these, as the diols having a hydrocarbon group in a side chain, aliphatic diols having from 1 to 5 carbon

atoms and having a branched structure are preferable from the viewpoint of making crystallization less likely to occur while maintaining mechanical strength and heat resistance, and 2-methyl-1,3-propanediol and neopentyl glycol are more preferable from the viewpoint of excellent mechanical recyclability.

From the viewpoint of adjusting the glass transition temperature (Tg) of the polyester (B1), aliphatic diols having a linear structure are preferably used as the polyhydric alcohols (Bb), an aliphatic diol having a linear structure with from 1 to 10 carbon atoms is more preferable, and ethylene glycol, 1,3-propylene glycol, 1,4-butanediol, 1,5-pentanediol, or 1,6-hexanediol is still more preferable. Among these, 1,4-butanediol is most preferable from the viewpoint of being capable of lowering the glass transition temperature (Tg) of the polyester (B1).

Furthermore, from the viewpoint of forming a reaction point with a crosslinking agent described later in the polyester (B1) and increasing a cohesive force, trihydric or higher polyhydric alcohols may be used as the polyhydric alcohols (Bb). Among these, trimethylolpropane, trimethylolethane, glycerin, pentaerythritol, 1,2,4-butanetriol, 1,2,5-pentanetriol, and 1,2,6-hexanetriol are preferably used. Among these, trimethylolpropane is preferably used from the viewpoint that gel is relatively hardly generated.

The polyester (B1) can be produced by selecting the polyvalent carboxylic acids (Ba) and the polyhydric alcohols (Bb) and subjecting them to a polycondensation reaction by a known method in the presence of a catalyst. In the polycondensation reaction, an esterification reaction and/or a transesterification reaction is first performed, and then a polycondensation reaction is performed.

Blending proportions of the polyvalent carboxylic acids (Ba) and the polyhydric alcohols (Bb) are not particularly limited. The blending proportion of the polyhydric alcohols (Bb) is preferably from 1.01 or more, more preferably from 1.05 to 2.5 equivalents, still more preferably from 1.1 to 2.0 equivalents, and most preferably from 1.2 to 1.7 equivalents per equivalent of the polyvalent carboxylic acids (Ba), from the viewpoint that the weight average molecular weight can be adjusted and from the viewpoint of yield.

The polyester (B1) thus produced preferably has a structural unit derived from aromatic dicarboxylic acids as the structural unit derived from the polyvalent carboxylic acids (Ba) from the viewpoint of mechanical recyclability, mechanical properties, and transparency.

When the polyester (B1) has a structural unit derived from aromatic dicarboxylic acids, a content thereof is preferably from 10 to 100 mol%, more preferably from 15 to 95 mol%, still more preferably from 25 to 90 mol%, particularly preferably from 35 to 85 mol%, especially preferably from 45 to 80 mol%, and most preferably from 55 to 75 mol% of the structural unit derived from the polyvalent carboxylic acids (Ba). When the content of the structural unit derived from aromatic dicarboxylic acids is within the above range, hydrolysis resistance, heat resistance, mechanical recyclability, and optical properties tend to be excellent.

When the polyester (B1) has a structural unit derived from aromatic dicarboxylic acids, a content thereof is usually from 1 to 70 mass%, preferably from 5 to 60 mass%, more preferably from 10 to 55 mass%, still more preferably from 15 to 50 mass%, particularly preferably from 20 to 45 mass%, and most preferably from 25 to 40 mass% of the polyester (B1). When the content of the structural unit derived from aromatic dicarboxylic acids is within the above range, mechanical recyclability and optical properties tend to be excellent.

When the polyester (B1) has a structural unit derived from aliphatic dicarboxylic acids, a content thereof is preferably 95 mol% or less, more preferably from 5 to 85 mol%, still more preferably from 10 to 75 mol%, particularly preferably from 15 to 65 mol%, especially preferably from 20 to 55 mol%, and most preferably from 25 to 45 mol% of the structural unit derived from the polyvalent carboxylic acids (Ba). When the content of the structural unit derived from aliphatic dicarboxylic acids is within the above range, pressure-sensitive adhesive force, tackiness, mechanical recyclability, and optical properties tend to be excellent.

When the polyester (B1) has a structural unit derived from aliphatic dicarboxylic acids, a content thereof is usually from 1 to 70 mass%, preferably from 3 to 55 mass%, more preferably from 5 to 45 mass%, still more preferably from 10 to 35 mass%, and most preferably from 15 to 30 mass% of the polyester (B1). When the content of the structural unit derived from aliphatic dicarboxylic acids is within the above range, pressure-sensitive adhesive force, tackiness, mechanical recyclability, and optical properties tend to be excellent.

The polyester (B1) preferably has a structural unit derived from aliphatic diols having from 1 to 5 carbon atoms as the structural unit derived from the polyhydric alcohols (Bb) from the viewpoint of pressure-sensitive adhesive force, tackiness, mechanical recyclability, and optical properties.

When the polyester (B1) has a structural unit derived from aliphatic diols having from 1 to 5 carbon atoms as the structural unit derived from the polyhydric alcohols (Bb), a content thereof is preferably from 10 to 100 mol%, more preferably from 30 to 95 mol%, and still more preferably from 50 to 90 mol% of the structural unit derived from the polyhydric alcohols (Bb). When the content of the structural unit derived from aliphatic diols having from 1 to 5 carbon atoms is within the above range, mechanical recyclability and optical properties tend to be excellent.

When the polyester (B1) has a structural unit derived from aliphatic diols having from 1 to 5 carbon atoms, a content thereof is usually from 10 to 70 mass%, preferably from 15 to 60 mass%, and more preferably from 25 to 45 mass% of the polyester (B1). When the content of the structural unit derived from aliphatic diols having from 1 to 5 carbon atoms is

within the above range, mechanical recyclability and optical properties tend to be excellent.

When the polyester (B1) has a structural unit derived from trihydric or higher polyhydric alcohols, a content thereof is not particularly limited, but is preferably 10 mol% or less, and more preferably from 0.1 to 5 mol% of the structural unit derived from the polyhydric alcohols (Bb) from the viewpoint of crosslinking efficiency, mechanical recyclability, optical properties, production efficiency, and the like.

When the polyester (B1) has a structural unit derived from trihydric or higher polyhydric alcohols, a content thereof is usually from 0.1 to 10 mass%, preferably from 0.3 to 5 mass%, and more preferably from 0.5 to 3 mass% of the polyester (B1). When the content of the structural unit derived from trihydric or higher polyhydric alcohols is within the above range, crosslinking efficiency, mechanical recyclability, and optical properties tend to be excellent.

Here, a proportion (composition proportion) of the structural unit derived from each of the components of the polyester (B1) can be determined by, for example, nuclear magnetic resonance (NMR).

A weight average molecular weight of the polyester (B1) is preferably from 2000 to 500000, more preferably from 10000 to 300000, still more preferably from 20000 to 200000, particularly preferably from 30000 to 150000, especially preferably from 50000 to 130000, and most preferably from 70000 to 110000. When the weight average molecular weight is within the above range, pressure-sensitive adhesive force, holding force, heat resistance, and mechanical recyclability tend to be excellent. The weight average molecular weight of the polyester (B1) can be measured by the same method as that for the polyester (A).

The glass transition temperature (Tg) of the polyester (B1) is -80°C or higher and lower than 30°C, more preferably from -70 to 20°C, still more preferably from -60 to 15°C, particularly preferably from -50 to 10°C, especially preferably from -40 to 5°C, and most preferably from -25 to 3°C. When the glass transition temperature is within the above range, pressure-sensitive adhesive force, mechanical recyclability, and optical properties tend to be excellent. The glass transition temperature of the polyester (B1) can be measured by the same method as that for the polyester (A).

The enthalpy of crystalline fusion of the polyester (B1) as measured by a differential scanning calorimeter is preferably 10 J/g or less, more preferably 5 J/g or less, still more preferably 3 J/g or less, particularly preferably 1 J/g or less, and most preferably no crystallization peak appears (0 J/g). When the enthalpy of crystalline fusion is within the above range, tackiness and pressure-sensitive adhesive force tend to be excellent. The enthalpy of crystalline fusion is energy consumption when a crystallized substance is heated and melted, and can be measured by a differential scanning calorimeter DSC.

Examples of a method for adjusting the enthalpy of crystalline fusion include a method of appropriately using polyvalent carboxylic acids having an alkyl group in a side chain or diols having a hydrocarbon group in a side chain, and a method of using three or more, and preferably four or more, copolymerization monomer components.

An acid value of the polyester (B1) is usually 30 mg KOH/g or less, preferably 20 mg KOH/g or less, more preferably 10 mg KOH/g or less, still more preferably 5 mg KOH/g or less, and most preferably 1 mg KOH/g or less. If the acid value is too large, moist heat resistance, mechanical recyclability, and optical properties tend to decrease. The acid value of the polyester (B1) can be determined by neutralization titration in accordance with JIS K 0070.

The acid value is adjusted by, for example, increasing the ratio of polyhydric alcohols during the esterification reaction or the transesterification reaction, or adjusting the reaction conditions. A lower limit value of the acid value is usually 0 mg KOH/g.

A content of the polyester (B1) in the polyester pressure sensitive adhesive (B) is usually 80 mass% or more, preferably 85 mass% or more, more preferably 90 mass% or more, and still more preferably 95 mass% or more, from the viewpoint of excellent mechanical recyclability and optical properties.

The polyester pressure sensitive adhesive (B) is preferably a crosslinked product crosslinked with a crosslinking agent, and more preferably a crosslinked product produced by crosslinking the polyester (B1) with a crosslinking agent, from the viewpoint of excellent pressure-sensitive adhesive force, tackiness, holding force, and heat resistance.

Crosslinking Agent

Examples of the crosslinking agent include compounds having a functional group that reacts with at least one of a hydroxy group and a carboxy group contained in the polyester (B1), such as a polyisocyanate-based compound, a polyepoxy-based compound, a polyoxazoline-based compound, and a polycarbodiimide-based compound. In addition, a polyfunctional acrylic monomer or a urethane acrylate-based oligomer that increases the cohesive force without reacting with the polyester (B1) can also be used. Among these, from the viewpoint of being capable of achieving a good balance between the initial pressure-sensitive adhesive force and the mechanical strength and heat resistance, and further having excellent thermal decomposition properties and mechanical recyclability, a polyisocyanate-based compound or a polycarbodiimide-based compound is preferable, and a polyisocyanate-based compound is particularly preferably used. One of these crosslinking agents may be used alone, or two or more thereof may be used in combination.

Examples of such a polyisocyanate-based compound include aromatic isocyanate-based compounds such as tolylene diisocyanate-based compounds such as 2,4-tolylene diisocyanate and 2,6-tolylene diisocyanate, xylylene

diisocyanate-based compounds such as 1,3-xylylene diisocyanate, diphenylmethane-based compounds such as diphenylmethane-4,4'-diisocyanate, and naphthalene diisocyanate-based compounds such as 1,5-naphthalene diisocyanate; alicyclic isocyanate-based compounds such as isophorone diisocyanate, 1,4-cyclohexane diisocyanate, 4,4'-dicyclohexylmethane diisocyanate, methylcyclohexane diisocyanate, isopropylidene dicyclohexyl-4,4'-diisocyanate, 1,3-diisocyanatomethylcyclohexane, and norbornane diisocyanate; aliphatic isocyanate-based compounds such as hexamethylene diisocyanate and trimethylhexamethylene diisocyanate; and adducts, biurets, and isocyanurates of the isocyanate-based compounds. The polyisocyanate-based compound can also be one in which an isocyanate moiety is blocked with phenol, lactam, or the like.

Examples of the polycarbodiimide-based compound include those produced by subjecting a diisocyanate to a decarboxylation condensation reaction. Examples of the diisocyanate include 4,4'-diphenylmethane diisocyanate, 3,3'-dimethoxy-4,4'-diphenylmethane diisocyanate, 3,3'-dimethyl-4,4'-diphenylmethane diisocyanate, 4,4'-diphenyl ether diisocyanate, 3,3'-dimethyl-4,4'-diphenyl ether diisocyanate, 2,4-tolylene diisocyanate, 2,6-tolylene diisocyanate, 1-methoxyphenyl-2,4-diisocyanate, isophorone diisocyanate, 4,4'-dicyclohexylmethane diisocyanate, and tetramethylxylylene diisocyanate. One of these may be used alone or two or more of these may be used in combination. The polycarbodiimide-based compound can also be one in which a terminal isocyanate moiety is sealed with an alcohol or the like.

A content of the crosslinking agent can be appropriately selected depending on the molecular weight of the polyester (B1) and the intended use, but usually, the crosslinking agent is contained in a proportion such that the reactive group contained in the crosslinking agent is preferably from 0.1 to 10 equivalents, more preferably from 0.2 to 5 equivalents, still more preferably from 0.3 to 3 equivalents, and particularly preferably from 0.5 equivalents to 1.5 equivalents, per equivalent of the hydroxy group and/or the carboxy group contained in the polyester (B1). The equivalent in the above range is preferable from the viewpoint of cohesive force, mechanical recyclability, and optical properties.

The content of the crosslinking agent is preferably from 0.01 to 15 parts by mass, more preferably from 0.1 to 10 parts by mass, still more preferably from 0.3 to 6 parts by mass, particularly preferably from 0.5 to 4 parts by mass, especially preferably from 0.75 to 3 parts by mass, and most preferably from 1 to 2 parts by mass, per 100 parts by mass of the polyester (B1). The content is preferably in the above range of the parts by mass from the viewpoint of pressure-sensitive adhesive force, cohesive force, mechanical recyclability, and optical properties.

The polyester pressure sensitive adhesive (B) may contain, in addition to the polyester (B1) and the crosslinking agent, additives such as hydrolysis suppressors, urethanization catalysts, antioxidants, tackifier resins, softeners, ultraviolet absorbers, stabilizers, and antistatic agents, and blending agents in the form of powders or particles such as inorganic or organic fillers, metal powders, and pigments, within a range in which the effects of the present disclosure are not impaired [for example, usually 20 mass% or less and preferably 10 mass% or less of the polyester pressure sensitive adhesive (B)]. One of these may be used alone or two or more of these may be used in combination. The polyester pressure sensitive adhesive (B) may contain a small amount of an impurity or the like contained in a raw material for producing a component.

A gel fraction of the crosslinked product of the polyester (B1) [polyester pressure sensitive adhesive (B)] is preferably from 10 to 100%, more preferably from 15 to 80%, still more preferably from 20 to 70%, particularly preferably from 25 to 60%, and most preferably from 30 to 50%. When the gel fraction is within the above range, pressure-sensitive adhesive force, holding force, heat resistance, mechanical recyclability, and optical properties tend to be excellent.

The gel fraction is a measure of the degree of crosslinking and is calculated, for example, by the following method. That is, the polyester (B1) [polyester pressure sensitive adhesive (B)] is wrapped with a 200-mesh SUS wire net and immersed in toluene at 23°C for 24 hours, and a mass percentage of the undissolved polyester (B1) [polyester pressure sensitive adhesive (B)] component remaining in the wire net after immersion relative to a mass of the polyester (B1) [polyester pressure sensitive adhesive (B)] before immersion is taken as the gel fraction.

Method for Producing Polyester Resin

A method for producing the present polyester resin will be described.

The method for producing the present polyester resin includes reacting a polyester (A) having a glass transition temperature of 30°C or higher and lower than 140°C and a polyester (B1) having a glass transition temperature of -80°C or higher and lower than 30°C. A polyester resin composition containing the present polyester resin is produced by the production method.

As the polyester (A) and the polyester pressure sensitive adhesive (B) containing the polyester (B1), as described above, used products separated and collected as recyclable waste, scrap materials generated in the production process, unused products, and the like can be used.

The polyester (A) and the polyester pressure sensitive adhesive (B) containing the polyester (B1) may be pulverized into pellets or flakes, and washed by a known washing means such as alkali washing or warm water washing to remove dirt remaining on surfaces of the pulverized pellets or flakes or foreign matters mixed therein, as required. The

washed pellets or flakes may be dried as necessary.

In the method for producing the present polyester resin, the polyester (A) and the polyester (B1) contained in the polyester pressure sensitive adhesive (B) may be heated and melted to react them.

A mass ratio of the polyester (B1) to the polyester (A) in the reaction is usually from 0.1 to 10 parts by mass, preferably from 0.2 to 8 parts by mass, more preferably from 0.3 to 8 parts by mass, and most preferably from 0.5 to 5 parts by mass, per 100 parts by mass of the polyester (A). When the mass ratio of the polyester (B1) to the polyester (A) is within the above range, moldability, strength, heat resistance, mechanical recyclability, and optical properties tend to be excellent.

In addition, when the polyester (A) and the polyester (B1) are reacted, a known antioxidant is contained in an amount of usually from 0.01 to 10 parts by mass, preferably from 0.05 to 5 parts by mass, more preferably from 0.1 to 3 parts by mass, and still more preferably from 0.3 to 1.5 parts by mass, per 100 parts by mass of a total amount of the polyester (A) and the polyester (B1). When the content of the antioxidant is within the above range, moldability, strength, heat resistance, mechanical recyclability, and optical properties tend to be excellent.

Examples of the antioxidant include phenol-based antioxidants, hindered phenol-based antioxidants, amine-based antioxidants, hindered amine-based antioxidants, sulfur-based antioxidants, and phosphoric acid-based antioxidants. Among these, at least one selected from hindered phenol-based antioxidants, hindered amine-based antioxidants, and phosphoric acid-based antioxidants is preferable, and a hindered phenol-based antioxidant is more preferable.

Examples of the hindered phenol-based antioxidant include antioxidants having a hindered phenol structure in which a group having a large steric hindrance, such as a tertiary butyl group, is bonded to at least one of the carbon atoms adjacent to the carbon atom on the aromatic ring of phenol bonded to the hydroxy group.

When the polyester (A) and the polyester (B1) are reacted, the reaction is performed preferably in an inert gas atmosphere, and more preferably in a nitrogen atmosphere, from the viewpoint of moldability, strength, heat resistance, mechanical recyclability, and optical properties.

When the polyester (A) and the polyester (B1) are reacted, the reaction is preferably performed under a vacuum condition of from 0.1 to 50 torr, more preferably from 0.3 to 40 torr, still more preferably from 0.5 to 30 torr, particularly preferably from 1 to 20 torr, and especially preferably from 3 to 10 torr, from the viewpoint of moldability, strength, heat resistance, mechanical recyclability, and optical properties. When the vacuum condition is within the above range, oxidative degradation of the polyester (A) and the polyester (B1) is suppressed, and moldability, strength, heat resistance, mechanical recyclability, and optical properties tend to be excellent.

A heating and melting temperature is preferably from 160 to 280°C, more preferably from 180 to 275°C, still more preferably from 200 to 270°C, and most preferably from 220 to 265°C from the viewpoint of mechanical recyclability. When the heating and melting temperature is within the above range, the transesterification reaction between the polyester (A) and the polyester (B1) efficiently proceeds, and mechanical recyclability and optical properties tend to be excellent.

A heating time is preferably from 1 to 24 hours, and more preferably from 2 to 10 hours, from the viewpoint of mechanical recyclability and transparency.

By reacting them under such conditions, the transesterification reaction occurs between the polyester (A) and the polyester (B1), resulting in the formation of the present polyester resin, which is a reaction product of these polyesters.

A content of the structural unit derived from the polyester (B1) in the present polyester resin is preferably 10 mass% or less, more preferably 8 mass% or less, still more preferably 6 mass% or less, particularly preferably 4 mass% or less, and most preferably 2 mass% or less. When the content of the structural unit derived from the polyester (B1) is within the above range, moldability, strength, heat resistance, mechanical recyclability, and optical properties tend to be excellent.

The present polyester resin has a structural unit derived from polyvalent carboxylic acids and a structural unit derived from polyhydric alcohols, and a content of the structural unit derived from aromatic dicarboxylic acids in the polyester resin is preferably from 10 to 90 mass%, more preferably from 30 to 85 mass%, still more preferably from 40 to 80 mass%, particularly preferably from 50 to 75 mass%, and most preferably from 60 to 70 mass%. When the content of the structural unit derived from aromatic dicarboxylic acids is within the above range, moldability, strength, heat resistance, mechanical recyclability, and optical properties tend to be excellent.

A content of the structural unit derived from aliphatic diols having from 1 to 5 carbon atoms in the present polyester resin is usually from 10 to 90 mass%, preferably from 15 to 70 mass%, more preferably from 20 to 60 mass%, particularly preferably from 25 to 50 mass%, and most preferably from 30 to 40 mass%. When the content of the structural unit derived from aliphatic diols having from 1 to 5 carbon atoms is within the above range, moldability, strength, heat resistance, mechanical recyclability, and optical properties tend to be excellent.

A content of the present polyester resin in the polyester resin composition is usually 80 mass% or more, preferably 90 mass% or more, more preferably 95 mass% or more, and still more preferably 98 mass% or more, from the viewpoint of excellent mechanical recyclability and optical properties.

The polyester resin composition may contain a nucleating agent, an antioxidant, a chain extender, a hydrolysis suppressor, a coloring inhibitor, a pigment, a dye, an ultraviolet absorber, a mold release agent, a lubricant, a flame

retardant, an antistatic agent, inorganic and/or organic particles, and the like depending on the use, within a range in which the effects of the present disclosure are not inhibited (for example, 10 mass% or less and preferably 5 mass% or less of the polyester resin composition).

The polyester resin composition may contain an additive derived from a molded article containing the polyester (A), an additive derived from the polyester (B1), and a blending agent, within a range in which the effects of the present disclosure are not inhibited.

In addition, the polyester resin composition may contain an additional resin other than the present polyester resin, but a content of the additional resin is preferably 10 mass% or less, more preferably 5 mass% or less, still more preferably 3 mass% or less, even still more preferably 1 mass% or less, particularly preferably 0.1 mass% or less, and most preferably 0 mass%, based on a total amount of the polyester resin composition.

A moisture content of the polyester resin composition is preferably 0.5% or less, more preferably 0.3% or less, still more preferably 0.1% or less, particularly preferably 0.05% or less, especially preferably 0.03% or less, and most preferably 0.01% or less. When the moisture content is within the above range, moldability, strength, heat resistance, and mechanical recyclability tend to be excellent. The moisture content of the present resin composition is measured by a Karl Fischer moisture measurement apparatus.

Polyester Resin

The content of nitrogen atoms contained in the present polyester resin is preferably from 0.1 to 1000 ppm, more preferably from 1 to 750 ppm, still more preferably from 3 to 500 ppm, particularly preferably from 5 to 300 ppm, especially preferably from 10 to 200 ppm, and most preferably from 20 to 100 ppm. When the nitrogen atom content is within the above range, mechanical recyclability, mechanical properties, and optical properties tend to be excellent. The nitrogen atom content can be measured by a trace total nitrogen analyzer.

The nitrogen atoms contained in the present polyester resin are those contained when an isocyanate-based compound is used as the crosslinking agent for the polyester (B1) or when a carbodiimide-based compound is used as the hydrolysis suppressor, and, among these, are preferably those derived from an isocyanate group.

The glass transition temperature (Tg) of the present polyester resin is preferably 30°C or higher, more preferably from 40 to 140°C, still more preferably from 50 to 120°C, and most preferably from 60 to 100°C. When the glass transition temperature (Tg) is within the above range, moldability, strength and heat resistance tend to be excellent. The glass transition temperature of the present polyester resin can be measured by the same method as that for the polyester (A).

A weight average molecular weight of the present polyester resin is preferably from 5000 to 300000, more preferably from 10000 to 150000, still more preferably from 20000 to 100000, and particularly preferably from 30000 to 75000. When the weight average molecular weight is within the above range, moldability, strength, heat resistance, and mechanical recyclability tend to be excellent. The weight average molecular weight of the present polyester resin can be measured by the same method as that for the polyester (A).

An intrinsic viscosity of the present polyester resin is preferably from 0.3 to 1.5 dL/g, more preferably from 0.4 to 1.3 dL/g, still more preferably from 0.5 to 1.1 dL/g, particularly preferably from 0.6 to 1.0 dL/g, especially preferably from 0.65 to 0.9 dL/g, and most preferably from 0.7 to 0.8 dL/g. When the intrinsic viscosity is within the above range, moldability, strength, heat resistance, and mechanical recyclability tend to be excellent. The intrinsic viscosity of the present polyester resin is measured based on JIS K 7367.

An acid value of the present polyester resin is preferably 5 mg KOH/g or less, more preferably 4.5 mg KOH/g or less, still more preferably 4 mg KOH/g or less, particularly preferably 3.5 mg KOH/g or less, especially preferably 3 mg KOH/g or less, and most preferably 1 mg KOH/g or less. When the acid value is within the above range, hydrolysis resistance, heat resistance, mechanical recyclability, and optical properties tend to be excellent. The acid value of the present polyester resin can be determined by neutralization titration in accordance with JIS K 0070.

The present polyester resin when formed into a sheet having a thickness of 50 μm has a haze of preferably 5% or less, more preferably 4% or less, and still more preferably 3% or less. When the haze is the above numerical value or less, optical properties tend to be excellent. The haze is measured in accordance with JIS K 7136.

The present polyester resin and the polyester resin composition containing the present polyester resin can be suitably used for molded articles such as a polyester container, a polyester film, and a polyester fiber.

A method for molding the molded article is not particularly limited, and examples thereof include injection molding, extrusion molding, blow molding, and in-mold molding.

For example, the present polyester resin or polyester resin composition is formed into a sheet by extrusion molding, and the sheet is shaped into a desired shape by vacuum molding or the like to produce a container. These are useful as beverage bottles and lids thereof, trays and containers for foods such as fried foods and prepared foods, and the like. The sheet may be stretched to form a film or the like, which may be used as a protective film for inner and outer surfaces of a food packaging material, a tray, or a container.

The polyester container, the polyester film, and the polyester fiber have only to contain the present polyester

resin, and may be composed only of the present polyester resin or the polyester resin composition, or may be a laminate of the present polyester resin or the polyester resin composition and an additional resin.

## Examples

Hereinafter, the present disclosure will be more specifically described with reference to Examples, but the present disclosure is not limited to the Examples below as long as the gist of the present disclosure is not deviated. In the examples, "parts" and "%" are based on mass.
First, a polyester (A) and a polyester pressure sensitive adhesive (B) were prepared as follows.

### Polyester (A)

#### Preparation of Polyester (A-1)

Into a reaction can equipped with a heater, a thermometer, a stirrer, a rectifying column, a nitrogen introduction tube, and a vacuum apparatus, 323 parts of isophthalic acid as the polyvalent carboxylic acids (Aa), 60.3 parts of ethylene glycol and 243 parts of neopentyl glycol as the polyhydric alcohols (Ab), 373.7 parts of regenerated polyethylene terephthalate (256.9 parts of regenerated terephthalic acid and 116.8 parts of regenerated ethylene glycol), and 0.1 parts of zinc acetate as a catalyst were fed. The internal temperature was gradually raised to 260°C, and an esterification reaction was performed over 4 hours.
Thereafter, 0.05 parts of tetrabutyl titanate was fed as a catalyst, the internal temperature was 260°C, the pressure was reduced to 1.33 hPa, and a polycondensation reaction was performed over 3 hours to produce a polyester (A-1).
The glass transition temperature (Tg) of the resulting polyester (A-1) was 68°C, and the weight average molecular weight (Mw) thereof was 38000. Other physical properties and the like are as shown in Table 1 below.
The proportions of components in the finished product were isophthalic acid/regenerated terephthalic acid (= 50 mol%/50 mol%) as the polyvalent carboxylic acids (Aa) and regenerated ethylene glycol/ethylene glycol/neopentyl glycol (= 39 mol%/18 mol%/45 mol%) as the polyhydric alcohols (Ab), and the content of a structural unit derived from the regenerated polyethylene terephthalate in the polyester (A-1) was 42%.

### Polyester Pressure Sensitive Adhesive (B)

#### Preparation of Polyester (B1-1)

Into a reaction can equipped with a heater, a thermometer, a stirrer, a rectifying column, a nitrogen introduction tube, and a vacuum apparatus, 96.1 parts of isophthalic acid and 467.8 parts of sebacic acid as the polyvalent carboxylic acids (Ba), 271 parts of neopentyl glycol, 130.3 parts of 1,4-butanediol, 29.7 parts of 1,6-hexanediol, and 5 parts of trimethylolpropane as the polyhydric alcohols (Bb), and 0.1 parts of zinc acetate as a catalyst were fed. The internal temperature was gradually raised to 260°C, and an esterification reaction was performed over 4 hours.
Thereafter, 0.05 parts of tetrabutyl titanate was fed as a catalyst, the internal temperature was 260°C, the pressure was reduced to 1.33 hPa, and a polycondensation reaction was performed over 3 hours to produce a polyester (B1-1).
The glass transition temperature (Tg) of the resulting polyester (B1-1) was -48°C, and the weight average molecular weight (Mw) thereof was 84000. Other physical properties and the like are as shown in Table 2 below.
The proportions of components in the finished product were isophthalic acid/sebacic acid (= 20 mol%/80 mol%) as the polyvalent carboxylic acids (Ba), and neopentyl glycol/1,4-butanediol/1,6-hexanediol/trimethylolpropane (= 59 mol%/34 mol%/6 mol%/1 mol%) as the polyhydric alcohols (Bb).

#### Preparation of Polyesters (B1-2) and (B1-3)

Polyesters (B1-2) and (B1-3) were produced in the same manner as in the preparation of the polyester (B1-1), except that the proportions of the components as the polyvalent carboxylic acids (Ba) and polyhydric alcohols (Bb) in the finished product were the proportions shown in Table 2 below.
The glass transition temperature (Tg) of the resulting polyester (B1-2) was -32°C, and the weight average molecular weight (Mw) thereof was 88000. Other physical properties and the like are as shown in Table 2 below.
The glass transition temperature (Tg) of the resulting polyester (B1-3) was 1°C, and the weight average molecular weight (Mw) thereof was 94000. Other physical properties and the like are as shown in Table 2 below.

Preparation of Acrylic Resin (B1'-1)

Into a four-neck round bottom flask equipped with a reflux condenser, a stirrer, a nitrogen gas inlet, and a thermometer, 919 parts of butyl acrylate, 80 parts of acrylic acid, 1 part of 2-hydroxyethyl methacrylate, and 800 parts of ethyl acetate were fed. After the start of heating reflux, 5 parts of azobisisobutyronitrile (AIBN) was added as a polymerization initiator. The mixture was reacted at an ethyl acetate reflux temperature for 7 hours, and then diluted with ethyl acetate to produce an acrylic resin (B1'-1) solution.

The glass transition temperature of the resulting acrylic resin (B1'-1) was -48°C, and the weight average molecular weight thereof was 280000. The glass transition temperature was calculated using the Fox equation, and the weight average molecular weight was measured by the same method as that for the polyester (B1).

Polyester Pressure Sensitive Adhesive (B)

Preparation of Polyester Pressure Sensitive Adhesive (B-1)

The polyester (B1-1) produced above was diluted with ethyl acetate to a solid concentration of 50%, and 2 parts (solid) of a polyisocyanate-based compound [Takenate D101E (trimethylolpropane adduct of toluene diisocyanate: nitrogen atom content: 12.8%), available from Mitsui Chemicals, Inc.] as a crosslinking agent and 0.1 parts of an antioxidant (IRGANOX 1010, available from BASF) were blended into the polyester (B1-1) (100 parts as a solid), and the mixture was stirred and mixed to produce a polyester pressure sensitive adhesive composition.

The resulting polyester pressure sensitive adhesive composition was applied onto a 38 μm-thick PET mold release film (SP-PET-03-BU, available from Mitsui Chemicals Tohcello Inc.) using an applicator, and dried at 120°C for 4 minutes to produce a pressure sensitive adhesive sheet with a mold release film on one side having a pressure sensitive adhesive composition layer with a thickness of 50 μm.

Next, the surface of the pressure sensitive adhesive composition layer of the resulting pressure sensitive adhesive sheet with a mold release film on one side was covered with a 38 μm-thick PET mold release film (SP-PET-01-BU, available from Mitsui Chemicals Tohcello Inc.), and an aging treatment was performed at 40°C for 4 days, and the mold release films on both sides were peeled off to produce a polyester pressure sensitive adhesive (B-1). The composition and gel fraction of the polyester pressure sensitive adhesive (B-1) are shown in Table 3 below.

Preparation of Polyester Pressure Sensitive Adhesives (B-2) and (B-3)

Polyester pressure sensitive adhesives (B-2) and (B-3) were produced in the same manner as for the polyester pressure sensitive adhesive (B-1), except that the polyester (B1-1) used was changed to the polyesters (B1-2) and (B1-3), respectively. The compositions and gel fractions of the polyester pressure sensitive adhesives (B-2) and (B-3) are shown in Table 3 below.

Preparation of Acrylic Pressure Sensitive Adhesive (B'-1)

The acrylic resin (B1'-1) produced above was diluted with ethyl acetate to a solid concentration of 50%, and 0.5 parts (solid) of a polyisocyanate-based crosslinking agent (Takenate D101E, available from Mitsui Chemicals, Inc.) and 0.1 parts of an antioxidant (IRGANOX 1010, available from BASF) were blended into the acrylic resin (B1'-1) (100 parts as a solid), and the mixture was stirred and mixed to produce an acrylic pressure sensitive adhesive composition.

The resulting acrylic pressure sensitive acrylic adhesive composition was applied onto a 38 μm-thick PET mold release film (SP-PET-03-BU, available from Mitsui Chemicals Tohcello Inc.) using an applicator, and dried at 120°C for 4 minutes to produce a pressure sensitive adhesive sheet with a mold release film on one side having a pressure sensitive adhesive composition layer with a thickness of 50 μm.

Next, the surface of the pressure sensitive adhesive composition layer of the resulting pressure sensitive adhesive sheet with a mold release film on one side was covered with a 38 μm-thick PET mold release film (SP-PET-01-BU, available from Mitsui Chemicals Tohcello Inc.), and an aging treatment was performed at 40°C for 4 days, and the mold release films on both sides were peeled off to produce an acrylic pressure sensitive adhesive (B'-1). The composition and gel fraction of the acrylic pressure sensitive adhesive (B'-1) are shown in Table 3 below.

Example 1

Into a reaction can equipped with a heater, a thermometer, a stirrer, a rectifying column, a nitrogen introduction tube, and a vacuum apparatus, 500 parts of the polyester resin (A-1) produced above, 5 parts of the polyester pressure sensitive adhesive (B-1), and 0.5 parts of an antioxidant (IRGANOX 1010, available from BASF) were fed, and the inside of

the reaction can was purged with nitrogen. Thereafter, the internal temperature was gradually raised to 260°C, and the pressure was reduced to 7.5 torr, followed by heating and stirring over 5 hours, to produce a mechanically recycled polyester resin composition of Example 1.

Examples 2 to 6 and Comparative Example 1

Polyester resin compositions of Examples 2 to 6 and Comparative Example 1 were produced in the same manner as in Example 1, except that the types and the blending amounts of the polyester (A) and the polyester pressure sensitive adhesive (B) to be used were changed to the proportions shown in Table 4 below.

The resulting polyester resin compositions of Examples 1 to 6 and Comparative Example 1 were used to evaluate the optical property (haze) and the mechanical recyclability. The evaluation results are shown in Table 4 below.

Optical Property (Haze)

The polyester resin compositions of Examples 1 to 6 and Comparative Example 1 were each diluted with toluene/methyl ethyl ketone (= 70/30 (mass ratio)) to a solid concentration of 40% to produce a polyester resin composition solution. Each of the resulting polyester resin composition solutions was applied onto a PET mold release film (SP-PET-03-BU, available from Mitsui Chemicals Tohcello Inc.) using an applicator, and dried at 120°C for 5 minutes, and the mold release film was peeled off to produce a film having a thickness of 50 μm.

The resulting film was cut into a size of 30 mm × 50 mm in an environment of 23°C and 50% RH to prepare a test piece. The haze of the test piece was measured using HAZE MATER NDH2000 (available from Nippon Denshoku Industries Co., Ltd.) and evaluated according to the following evaluation criteria.

Evaluation Criteria

◎ (Excellent): 2.5 or less
○ (Very good): more than 2.5 and 3.5 or less
△ (Good): more than 3.5 and 5 or less
× (Poor): more than 5

Mechanical Recyclability

The polyester resin compositions produced in Examples 1 to 6 and Comparative Example 1 were each diluted with toluene/methyl ethyl ketone (= 70/30 (mass ratio)) to a solid concentration of 40% to produce a polyester resin composition solution. Using a nylon mesh filter (Nylon 250T: average aperture of 59 μm, aperture rate of 33%, wire diameter of 43 μm, thickness of 78 μm), 500 g of the resulting polyester resin composition solution was filtered, and evaluation was performed according to the following evaluation criteria.

Evaluation Criteria

◎ (Excellent): filtration possible
× (Poor): filter clogged with foreign matter, filtration impossible

[Table 1]

| Polyester (A) | | Polyvalent carboxylic acids (Aa) | | Polyhydric alcohols (Ab) | | | R value*1 | Regenerated PET content*2 (mass%) | Content of aromatic dicarboxylic acids*3 (mass%) | Content of aliphatic dios*4 (mass%) | Glass transition temperature (°C) | Ester bond concentration (mmol/g) | Weight average molecular weight | Acid value (mg KOH/g) |
|---|---|---|---|---|---|---|---|---|---|---|---|---|---|---|
| | | IPA | Regenerated TPA | Regenerated EG | EG | NPG | | | | | | | | |
| A-1 | Molar ratio (mol%) | 50 | 50 | 39 | 18 | 45 | 1.35 | 42 | 62 | 38 | 68 | 9.5 | 38000 | 0.3 |
| | Mass ratio (mass%) | 31 | 31 | 11 | 5 | 22 | | | | | | | | |

IPA: isophthalic acid, regenerated TPA: regenerated terephthalic acid (derived from regenerated PET), EG: ethylene glycol, NPG: neopentyl glycol, PET: polyethylene terephthalate

*1: Molar ratio of polyhydric alcohols (Ab) to polyvalent carboxylic acids (Aa)

*2: Content of structural unit derived from regenerated PET

*3: Content of structural unit derived from aromatic dicarboxylic acids

*4: Content of structural unit derived from aliphatic diols having from 1 to 5 carbon atoms

[Table 2]

| Polyester (B1) | | Polyvalent carboxylic acids (Ba) | | Polyhydric alcohols (Bb) | | | | Content of aromatic dicarboxylic acids*1 (mass%) | Content of aliphatic diols*2 (mass%) | Glass transition temperature (°C) | Enthalpy of crystalline fusion (J/g) | Ester bond concentration (mmol/g) | Weight average molecular weight | Acid value (mg KOH/g) |
|---|---|---|---|---|---|---|---|---|---|---|---|---|---|---|
| | | IPA | SebA | NPG | 1,4BG | 1,6HG | TMP | | | | | | | |
| B1-1 | Molar ratio (mol%) | 20 | 80 | 59 | 34 | 6 | 1 | 10 | 35 | -48 | 0 | 7.7 | 84000 | 0.1 |
| | Mass ratio (mass%) | 10.2 | 51.8 | 23.0 | 11.5 | 2.8 | 0.7 | | | | | | | |
| B1-2 | Molar ratio (mol%) | 40 | 60 | 59 | 34 | 6 | 1 | 21 | 36 | -32 | 0 | 7.9 | 88000 | 0.1 |
| | Mass ratio (mass%) | 20.9 | 40.0 | 23.7 | 11.9 | 2.8 | 0.7 | | | | | | | |
| B1-3 | Molar ratio (mol%) | 70 | 30 | 59 | 34 | 6 | 1 | 38 | 37 | 1 | 0 | 8.3 | 94000 | 0.2 |
| | Mass ratio (mass%) | 38.3 | 20.9 | 24.8 | 12.4 | 3.0 | 0.7 | | | | | | | |
| B1'-1 | Mass ratio (mass%) | BA/Aac/HEMA=91.9/8/0.1 | | | | | | - | - | -48 | 0 | - | 280000 | 65 |

IPA: isophthalic acid, SebA: sebacic acid, NPG: neopentyl glycol, 1,4BG: 1,4-butanediol, 1,6HG: 1,6-hexanediol, TMP: trimethylolpropane
BA: butyl acrylate, Aac: acrylic acid, HEMA: 2-hydroxyethyl methacrylate
*1: Content of structural unit derived from aromatic dicarboxylic acids
*2: Content of structural unit derived from aliphatic diols having from 1 to 5 carbon atoms

[Table 3]

| Polyester pressure sensitive adhesive (B) | Polyester (B1) | | Crosslinking agent | | Gel fraction (%) |
|---|---|---|---|---|---|
| | Type | Parts by mass | Type | Parts by mass | |
| B-1 | B1-1 | 100 | Polyisocyanate-based compound*2 | 2 | 35 |
| B-2 | B1-2 | 100 | Polyisocyanate-based compound*2 | 2 | 33 |
| B-3 | B1-3 | 100 | Polyisocyanate-based compound*2 | 2 | 59 |
| B'-1*1 | B1'-1 | 100 | Polyisocyanate-based compound*2 | 0.5 | 35 |

*1: Acrylic resin
*2: Takenate D101E (trimethylolpropane adduct of toluene diisocyanate)

| | Polyester (A) | | Polyester pressure sensitive adhesive (B) | | Content of aromatic dicarboxylic acids*1 (mass%) | Content of aliphatic diols*2 (mass%) | Nitrogen atom content (ppm) | Glass transition temperature (°C) | Weight average molecular weight | Acid value*3 (mg KOH/g) | Optical property (haze) | | Mechanical recyclability |
|---|---|---|---|---|---|---|---|---|---|---|---|---|---|
| | Type | Parts by mass | Type | Parts by mass | | | | | | | Value (%) | Evaluation | Evaluation |
| Example 1 | A-1 | 100 | B-1(B1-1) | 1 | 62 | 37 | 26 | 67 | 34000 | 2.6 | 3.6 | Δ | ◎ |
| Example 2 | A-1 | 100 | B-1(B1-1) | 3 | 61 | 38 | 76 | 67 | 39000 | 2.5 | 4.1 | Δ | ◎ |
| Example 3 | A-1 | 100 | B-2(B1-2) | 1 | 62 | 37 | 26 | 68 | 37000 | 2.5 | 2.9 | ○ | ◎ |
| Example 4 | A-1 | 100 | B-2(B1-2) | 3 | 62 | 37 | 76 | 67 | 36000 | 2.5 | 3.5 | ○ | ◎ |
| Example 5 | A-1 | 100 | B-3(B1-3) | 1 | 62 | 37 | 26 | 68 | 39000 | 2.6 | 2.4 | ◎ | ◎ |
| Example 6 | A-1 | 100 | B-3(B1-3) | 3 | 62 | 36 | 76 | 68 | 39000 | 2.5 | 3.3 | ○ | ◎ |
| Comparative Example 1 | A-1 | 100 | B'-1(-B1'-1)* | 1 | 62 | 37 | 6 | 69 | Unmeasurable | 3.6 | 18.2 | × | × |

* Acrylic pressure sensitive adhesive
*1: Content of structural unit derived from aromatic dicarboxylic acids
*2: Content of structural unit derived from aliphatic diols having from 1 to 5 carbon atoms
*3: Acid value of polyester resin as reaction product of polyester (A) and polyester (B1)

From the results shown in Table 4, the polyester resin compositions of Examples 1 to 6 containing the polyester resin as a reaction product of the polyester (A) and the polyester (B1) had excellent mechanical recyclability without deterioration in mechanical properties of resin, and further had excellent optical properties.

On the other hand, the polyester resin composition of Comparative Example 1 using an acrylic pressure sensitive adhesive as the pressure sensitive adhesive was inferior in mechanical recyclability and optical properties.

Specific embodiments of the present disclosure were described in the above examples, but the above examples are merely illustrative and are not to be construed as limiting. Various modifications apparent to those skilled in the art are intended to be within the scope of the present disclosure.

Industrial Applicability

The present polyester resin is not deteriorated in mechanical properties of resin and is excellent in mechanical recyclability and optical properties, and therefore can be suitably used as a raw material for molding a container, a film, and a fiber.

## Claims

1. A polyester resin, which is a reaction product of a polyester (A) having a glass transition temperature of 30°C or higher and lower than 140°C and a polyester (B1) having a glass transition temperature of -80°C or higher and lower than 30°C.

2. The polyester resin according to claim 1, wherein a content of nitrogen atoms in the polyester resin is from 0.1 to 1000 ppm.

3. The polyester resin according to claim 1 or 2, wherein a content of a structural unit derived from the polyester (B1) in the polyester resin is 10 mass% or less.

4. The polyester resin according to any one of claims 1 to 3, wherein the polyester resin has a glass transition temperature of 30°C or higher.

5. The polyester resin according to any one of claims 1 to 4, wherein the polyester resin has a weight average molecular weight of from 5000 to 300000.

6. The polyester resin according to any one of claims 1 to 5, wherein the polyester resin has an acid value of 5 mg KOH/g or less.

7. The polyester resin according to any one of claims 1 to 6, wherein the polyester resin has a structural unit derived from polyvalent carboxylic acids and a structural unit derived from polyhydric alcohols, and
a content of a structural unit derived from aromatic dicarboxylic acids in the polyester resin is from 10 to 90 mass%.

8. The polyester resin according to any one of claims 1 to 7, wherein the polyester resin when formed into a sheet having a thickness of 50 μm has a haze of 5% or less.

9. The polyester resin according to any one of claims 1 to 8, wherein the polyester (A) has a structural unit derived from terephthalic acids and a structural unit derived from ethylene glycol.

10. The polyester resin according to any one of claims 1 to 9, wherein the polyester (A) has a structural unit derived from a regenerated thermoplastic polyester (A1).

11. The polyester resin according to any one of claims 1 to 10, wherein the polyester (B1) has a structural unit derived from aromatic dicarboxylic acids.

12. The polyester resin according to any one of claims 1 to 11, wherein a content of aromatic dicarboxylic acids in a structural unit derived from polyvalent carboxylic acids (Ba) of the polyester (B1) is from 10 to 100 mol%.

13. The polyester resin according to any one of claims 1 to 12, wherein a content of aliphatic diols having from 1 to 5 carbon atoms in a structural unit derived from polyhydric alcohols (Bb) of the polyester (B1) is from 10 to 100 mol%.

**14.** The polyester resin according to any one of claims 1 to 13, wherein the polyester (B1) has an enthalpy of crystalline fusion of 10 J/g or less.

**15.** The polyester resin according to any one of claims 1 to 14, wherein the polyester (B1) is a crosslinked product.

**16.** The polyester resin according to any one of claims 1 to 15, wherein a gel fraction of a crosslinked product of the polyester resin (B1) is from 10 to 100%.

**17.** A polyester container comprising the polyester resin according to any one of claims 1 to 16.

**18.** A polyester film comprising the polyester resin according to any one of claims 1 to 16.

**19.** A polyester fiber comprising the polyester resin according to any one of claims claim 1 to 16.

**20.** A method for producing a polyester resin, the method comprising reacting a polyester (A) having a glass transition temperature of 30°C or higher and lower than 140°C and a polyester (B1) having a glass transition temperature of -80°C or higher and lower than 30°C.

**21.** The method for producing a polyester resin according to claim 20, wherein the reacting is performed in a nitrogen atmosphere.

**22.** The method for producing a polyester resin according to claim 20 or 21, wherein the reacting is performed under a vacuum condition of from 0.1 to 50 torr.

**23.** The method for producing a polyester resin according to any one of claims 20 to 22, wherein, in the reacting, the polyester (A) and the polyester (B1) are heated to and melted at a temperature of from 160 to 280°C.

## INTERNATIONAL SEARCH REPORT

International application No. **PCT/JP2024/035037**

**A. CLASSIFICATION OF SUBJECT MATTER**

***C08L 67/00***(2006.01)i; ***C08G 63/127***(2006.01)i
FI: C08L67/00; C08G63/127

According to International Patent Classification (IPC) or to both national classification and IPC

**B. FIELDS SEARCHED**

Minimum documentation searched (classification system followed by classification symbols)

C08L67/00; C08G63/127

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2014-208741 A (TOYOBO CO., LTD.) 06 November 2014 (2014-11-06) claims, paragraphs [0072]-[0073], [0085], [0095], [0097], [0099]-[0101], [0106]-[0108], [0110] | 1-2, 4-20, 23 |
| A | claims, paragraphs [0072]-[0073], [0085], [0095], [0097], [0099]-[0101], [0106]-[0108], [0110] | 3, 21-22 |
| X | JP 09-279115 A (HITACHI CHEM CO., LTD.) 28 October 1997 (1997-10-28) claims, paragraphs [0008]-[0016] | 1-2, 5, 10, 14-20, 23 |
| A | claims, paragraphs [0008]-[0016] | 3-4, 6-9, 11-13, 21-22 |
| X | JP 2013-160914 A (RICOH COMPANY, LTD.) 19 August 2013 (2013-08-19) claims, paragraphs [0175]-[0186] | 1-2, 4-5, 11-14 |
| A | claims, paragraphs [0175]-[0186] | 3, 6-10, 15-23 |
| A | JP 11-060716 A (MITSUI CHEMICALS, INC.) 05 March 1999 (1999-03-05) entire text | 1-23 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **13 November 2024** | **26 November 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No. **PCT/JP2024/035037**

**C. DOCUMENTS CONSIDERED TO BE RELEVANT**

| Category* | Citation of document, with indication, where appropriate, of the relevant passages | Relevant to claim No. |
|---|---|---|
| A | JP 2023-121119 A (RICOH COMPANY, LTD.) 30 August 2023 (2023-08-30) entire text | 1-23 |
| A | JP 2019-167500 A (MITSUBISHI CHEMICAL CORPORATION) 03 October 2019 (2019-10-03) entire text | 1-23 |
| A | JP 2023-024126 A (MITSUBISHI CHEMICAL CORPORATION) 16 February 2023 (2023-02-16) entire text | 1-23 |
| A | JP 2014-058125 A (FUJIFILM CORPORATION) 03 April 2014 (2014-04-03) entire text | 1-23 |

Form PCT/ISA/210 (second sheet) (July 2022)

**INTERNATIONAL SEARCH REPORT**
**Information on patent family members**

International application No.
**PCT/JP2024/035037**

| Patent document cited in search report | Publication date (day/month/year) | Patent family member(s) | Publication date (day/month/year) |
|---|---|---|---|
| JP 2014-208741 A | 06 November 2014 | (Family: none) | |
| JP 09-279115 A | 28 October 1997 | (Family: none) | |
| JP 2013-160914 A | 19 August 2013 | US 2013/0202996 A1<br>claims, paragraphs [0180]-[0191] | |
| JP 11-060716 A | 05 March 1999 | US 6001891 A<br>entire text<br>EP 812868 A1 | |
| JP 2023-121119 A | 30 August 2023 | US 2023/0266688 A1<br>entire text<br>EP 4230678 A1 | |
| JP 2019-167500 A | 03 October 2019 | (Family: none) | |
| JP 2023-024126 A | 16 February 2023 | (Family: none) | |
| JP 2014-058125 A | 03 April 2014 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000010489 A
- JP 2023069194 A